# EUROPEAN PATENT APPLICATION

(11) **EP 1 353 005 A1**
(43) Date of publication of application: **15.10.2003**
(21) Application number: 02007935.6
(22) Date of filing: 09.04.2002
(51) Int. Cl.: D06M 15/568, D06M 15/572, D06M 15/564, C08G 18/10

(54) **A shrink-proofing agent for keratin fibers and a process for shrink-proofing using the same**

(30) Priority: 11.04.2001 JP 2001113230
(71) Applicant: DAI-ICHI KOGYO SEIYAKU CO., LTD., Shimogyo-ku Kyoto (JP)
(72) Inventor: Doi, Takeshi, Omihachiman, Shiga (JP); Saiuchi, Naofumi, Yasugun, Shiga (JP); Kouchi, Masahiro, Ikomagun, Nara (JP); Miyamura, Takeshi, Kameoka, Kyoto (JP)
(74) Representative: Strehl Schübel-Hopf & Partner

(57) **Abstract**

The invention provides a shrink-proofing agent which is a non-chlorinated compound, and is sufficiently resinified only by heating in a drying step, and further has an excellent shrink-resistant performance and an excellent washing resistance and can retain the texture characteristic of keratin fibers. The invention uses the shrink-proofing agent containing a water-soluble heat-reactive urethane prepolymer wherein a part of isocyanate groups are reacted with an active hydrogen compound to introduce hydrophilic groups and the remaining isocyanate groups are blocked with a blocking agent which regenerates isocyanate groups by heating treatment.

## Description

### BACKGROUND ART

The present invention relates to a shrink-proofing agent for keratin fibers and a process for shrink-proofing using the same.

As laundering methods for keratin fibers, dry cleaning methods in which laundering is carried out using chlorinated solvents or petrol solvents are mainly employed because keratin fibers are felted/shrunk in water laundering unless a shrink-proof agent is imparted. However, the dry cleaning elicits environmental problems such as air pollution. Thus, along with intensification of activities for environmental problems, water laundering has been increased recently.

As a shrink-proofing for keratin fibers in the forms of top, roving yarns or yarns, a process by first treating with chloride or a chlorinated compound and subsequently treating with a chlorinated cationic resin (polyamide epichlorohydrin resin) has been conventionally used worldwide. However, it has been pointed out that organic substances such as proteins of keratin fibers bind to chloride to produce AOX (Absorbable Organic Halogens) which are discharged into waste solutions resulting in badly affecting environments in chlorinated shrink-proofing methods. AOX are also said to be a cause of carcinogenesis when they are incorporated in a living body or an organism and accumulated.

Currently, environmental regulations are intensified as consciousness for environmental conservation awareness has been elevated as represented by ISO-14000 series. Europe played a most active part therein. Thus, non-chlorinated shrink-proofing processes wherein keratin fibers are not felted/shrunk in water laundering and AOX are not produced are required in shrink-proofing of keratin fibers.

Under the circumstances as stated above, a counter measure of using a non-chlorinated shrink-proof agent for the keratin fibers in the forms of top, roving yarns or yarns, the process using a silicone resin (Japanese Patent Laid-Open No.100970/1992) and the process of using an alkali protease (Japanese Patent Laid-Open No.172580/1999) have been proposed. However, sufficient satisfaction has not been obtained yet because sufficient shrink-proofing can not be attained and problems occur during the processing.

On the other hand, against a process by treating with urethane polymer blocked with sodium bisulfite, a disadvantage has been pointed out that the polymer is not sufficiently taken up by the anionized keratin fibers in the forms of top, roving yarns and yarns because it is an anionic resin. Moreover, when treated with the urethane prepolymer blocked with a blocking agent having active hydrogen other than sodium bisulfite such as alcohols or alkylphenols, shrink-proofing having sufficient washing resistance has not been imparted because resinification does not proceed sufficiently only by heating in the drying step due to the high dissociation temperature of the blocking agent.

The present invention has been carried out in the light of the problems mentioned above, and provides a shrink-proof agent which is a non-chlorinated compound and can impart shrink-proofing performance having excellent washing resistance by being sufficiently resinified only with heating in the drying step and can retain the texture characteristic of keratin fibers as well as a processing method for shrink-proofing using the same.

### SUMMARY OF THE INVENTION

The shrink-proofing agent for keratin fibers of the invention is a shrink-proofing agent for keratin fibers containing urethane prepolymer, specifically containing water-soluble and heat reactive urethane prepolymer wherein a part of the free isocyanate groups are reacted with an active hydrogen compound to introduce hydrophilic groups and the remaining isocyanate groups are blocked with a blocking agent which regenerates isocyanate groups by heating treatment.

As active hydrogen compounds, amino alcohols including tertiary amino groups can be used. Tertiary amino groups contained in amino alcohols can be quaternized with a quaternizing agent or neutralized with an acid.

As blocking agents, phenols having an electron withdrawing group at the ortho- or para-position can be used. The above electron withdrawing group is preferably a carboxyl group or esterified carboxyl group. As the blocking agent, suitably used are one or more selected from the group consisting of para-hydroxybenzoic acid, para-hydroxybenzoate ester, salicylic acid , and salicylate ester. Also imidazoles can be used or oximes can be used.

Further, the processing method for shrink-proofing of keratin fibers of the invention comprises incorporating any of the above shrink-proofing agents into anionized keratin fibers followed by conducting a drying treatment.

### PREFERRED EMBODIMENTS OF THE INVENTION

The urethane prepolymer employed in the present invention is produced by reacting a polyol moiety (polyether polyol or polyester polyol) with a polyisocyanate compound at excess NCO/OH equivalent ratio according to the method known in the art.

Polyether polyol, polyester polyol and polyisocyanate compounds to be used can be selected optionally from those conventionally used in the field of urethane industry, however, as a polyol component, trivalent or more than trivalent polyether polyol with molecular weight of from 1,000 to 20,000 is preferable especially in terms of shrink-proofing effect.

Polyether polyol can be synthesized by polyadding alkylene oxide in the presence of a basic catalyst using an active hydrogen compound as the starting material.

Specific examples of active hydrogen compounds include triols such as glycerine, hexanetriol, trimethylolethane trimethylolpropane and the like, alkanol amines such as triethanolamine, triisopropanolamine, tributanolamine and the like. Also, tetrafunctional alcohol such as pentaerythritol can be employed. Specific examples of alkylene oxide include ethylene oxide, propylene oxide, butylene oxide and the like.

Polyester polyol can be also obtained by a condensation reaction of a dibasic acid component and a dihydric alcohol component.

Specific examples of the dibasic acid component useful as a polyester polyol component include saturated or unsaturated aliphatic and aromatic dibasic acids such as oxalic acid, malonic acid, succinic acid, glutaric acid, adipic acid, maleic acid, fumaric acid, phthalic acid, isophthalic acid, terephthalic acid. Specific examples of dihydric alcohol component include aliphatic glycol such as ethylene glycol, diethylene glycol, triethylene glycol, propylene glycol, 1,4-butanediol, 1,5-pentanediol, 1,6-hexanediol, 3-methyl-1,5-pentanediol, and alicyclic glycol such as cyclohexanediol.

The urethane prepolymer is obtained by reacting a polyisocyanate component with the a polyol components obtained as described above.

Usable isocyanate compounds include, for example, organic polyisocyanates such as tolylene diisocyanate (TDI), diphenylmethane diisocyanate (MDI), polymeric MDI, hexamethylene diisocyanate (HNDI), xylene diisocyanate (XDI), tetra-methylxylylene diisocyanate (TMXDI), isophorone diisocyanate (IPDI) but are not especially limited thereto. When non-xan-thochroism is required, aliphatic isocyanates such as HMDI, alicyclic isocyanates such as IPDI and aromatic cyclic isocyanates such as XDI, TMXDI are preferable.

The urethane prepolymer having at least 0.5% or more, preferably from 1 to 5% by weight of free isocyanate groups is obtained by mixing and reacting the above polyether polyol with polyisocyanate according to the method known in the art. At that time, the molar ratio of NCO groups/active hydrogen groups may be 1.0 or more, and usually the objective urethane prepolymer is obtained by reacting at a temperature ranging from 30°C to 130°C for time period ranging from 30 minutes to 50 hours.

A part of the free isocyanate groups of this urethane polymer is reacted with an active hydrogen compound having tertiary amino groups to introduce hydrophilic groups.

The active hydrogen compounds having tertiary amino groups to be used are not limited, however, preferred are aliphatic compounds having a group containing active hydrogen such as a hydroxyl group or primary amino group and having a tertiary amino group, for example, N,N-dimethyl ethanolamine, N-methyl diethanolamine, N,N-dimethyl ethylenediamine. Also, N,N,N-trimethylol amine, N,N,N-triethanol amine which are tertiary amines can be used.

The water-soluble blocked urethane prepolymer is obtained by reacting active hydrogen containing groups with isocyanate groups to bind these compounds with the urethane prepolymer, blocking the remaining isocyanate groups and subsequently quaternizing tertiary amino groups with a quaternizing agent. As quaternizing agents, the use of dimethyl sulfate and diethyl sulfate is preferable in terms of non-chlorinated agents.

Also, without quaternizing, the urethane prepolymer can be solubilized in water by neutralizing the tertiary amino groups with an acid to form a salt. As neutralizing acids, organic acids such as oxalic acid, malonic acid, succinic acid, glutaric acid, adipic acid, maleic acid or phosphoric acid are preferable.

It is most preferable that the urethane prepolymer is solubilized in water in the form of a quaternary ammonium salt in terms of its uptake by anionized keratin fibers.

The ratio of an active hydrogen compound for introduction of hydrophilic groups to the urethane prepolymer is the ratio at which the prepolymer is enough to be solubilized in water after the introduction and free isocyanate groups can be left. The ratio is varied depending on the types of original polyol and polyisocyanate, and the type of hydrophilic groups, but is usually from 10 to 50 equivalent % based on the content of prepolymer isocyanate.

The remaining isocyanate groups of the urethane prepolymer after its reaction with the active hydrogen compound as described above are blocked with a blocking agent which regenerates isocyanate groups by heating treatment.

One or more blocking agents selected from phenols having an electron withdrawing group at the ortho- or para-position, or imidazoles or oximes can be used as the blocking agent.

Phenols having an electron withdrawing group such as trifluoromethyl, nitro, cyano, acetyl, alkoxycarbonyl, carboxyl, alkylsulfonyl can be used as a phenol having an electron withdrawing group at the ortho- or para-position. The especially preferable electron withdrawing group is a free or esterified carboxyl group. More specifically, it is one selected from among para-hydroxybenzoic acid, para-hydroxybenzoate ester, salicylic acid , and salicylate ester. As these compounds are used as preservatives which are accepted as food additives or raw materials of medicines, they appear to be safe even if they remain in the fibers after deblocking and they affect the ecosystem less even if they are contained in waste water from the processing factories. When an amino group is used as an electron withdrawing group, it does not function as a blocking agent and is not appropriate because it reacts with an isocyanate group irreversibly to form an urea bond.

In addition to imidazole, imidazoles include common imidazole derivatives, for example, the compounds having active hydrogen groups such as 2-methylimidazole, 2-ethylimidazole, 2-ethyl-4-methylimidazole, 2-undecylimidazole, 2-phenylimidazole, 2-phenyl-4-methylimidazole.

Oximes include butanoneoxime, acetoneoxime, cyclo-hexanoneoxime, and especially preferred are butanoneoxime and acetoneoxime.

In order to block the remaining isocyanate groups of the urethane prepolymer with these blocking agents, the reaction is usually conducted at temperature ranging from 50°C to 65°C for a time period ranging from 0.5 to 2 hours although the condition is varied depending on the types of the blocking agents.

The synthesis of the above urethane prepolymer is usually carried out in a non-solvent system. However, depending on the viscosity of the urethane prepolymer, a solvent which is inert to isocyanate and can dissolve the urethane prepolymer may be used. In that case, examples of the solvent include dioxane, methylethylketone, dimethylformamide, tetrahydrofuran, N-methyl-2-pyrrolidone, toluene, propyleneglycol monomethylether acetate.

The blocked water-soluble urethane prepolymer obtained by the above is rendered to be an aqueous solution by adding water and used in the shrink-proofing process. The concentration of the urethane prepolymer in the aqueous solution is not especially limited, but can usually range from about 10 to 40g/l.

A solution or an emulsion of anti-oxidant agents or lightproofing agents may be added to the aqueous solution of urethane prepolymer. Examples of anti-oxidants include solutions or emulsions of hindered phenol type or semicarbazide type anti-oxidants. Examples of lightproofing agents include solutions or emulsions hindered amine (HALS) type, benzophenone type, benzotriazole type.

The aqueous solution of urethane prepolymer obtained as described above becomes a stable water-soluble and heat-reactive urethane treating agent.

Next, the process for shrink-proofing of keratin fibers of the invention comprises an uptake treatment of the shrink-proof agent comprising such blocked water-soluble urethane prepolymer into the anionized keratin fibers followed by drying treatment.

Treating with persulfate is preferable as a non-chlorinated agent in the method of anionizing the keratin fibers. The cationic urethane prepolymer having quaternized ammonium salt or tertiary amino groups neutralized with an acid is taken up by the anionized keratin fibers, the blocking agent is dissociated in the heating step of the subsequent drying step, and then, the regenerated isocyanate groups in the urethane prepolymer react with functional groups having active hydrogen such as -NH2 or -SH groups which the keratin fibers possess and the cationic urethane prepolymer is self-polymerized to form a membrane having washing resistance on the surface of the keratin fibers, thereby imparting a shrink-proof effect.

In order to facilitate the polymerization reaction of the resin in the heating step of the keratin fibers treated with the water-soluble heat-reactive urethane prepolymer of the invention, the process can be conducted with adding bicarbonate such as sodium bicarbonate or potassium bicarbonate in a resin processing bath to adjust the pH to the range of from neutral to weak alkaline. Also, an organic tin catalyst, organic acid metallic salt catalyst such as zinc acetate or potassium acetate, or an amine catalyst not having an active hydrogen such as trimethylamine or triethylamine can be used as a catalytic component to facilitate the polymerization reaction.

The quantity of the shrink-proofing agent of the invention to be attached is in terms of solid content preferably from 0.1 to 5.0 % by weight based on the weight of the keratin fibers.

The invention is specifically described by the examples below, but the invention is not limited to thereto.

### SYNTHETIC EXAMPLE 1:

Hexamethylene diisocyanate (50.4 parts) was added to 300 parts of alkylene oxide polyaddition product (average molecular weight: 3,000; weight ratio of ethylene oxide/propylene oxide (hereinafter represented as EO/PO): 70/30) whose starting material is glycerine, and reacted at 100°C for 2 hours to yield the urethane prepolymer having 4.0% by weight of free isocyanate groups.

Then, the temperature of the system is once lowered to 70°C, N,N-dimethyl ethanolamine (8.9 parts) was added and reacted at 70°C for 100 minutes. The content of free isocyanate groups was 2.5% at that time. Next, when the temperature of the system was 50°C, para-hydroxybenzoic acid (29.5 parts) was added, and the inner temperature was elevated to 70°C followed by reacting for 120 minutes.

After confirming the disappearance of the reaction of free isocyanate groups, dimethyl sulfate (12.6 parts) was added, quaternized at 70°C for 180 minutes and diluted with 1600 parts of water to yield the aqueous solution of a clear viscous component to facilitate the polymerization reaction.

The quantity of the shrink-proof agent of the invention to be attached is in terms of solid content preferably from 0.1 to 5.0 % by weight based on the weight of the keratin fibers.

The invention is specifically described by examples below, but the invention is not limited to thereto.

### SYNTHETIC EXAMPLE 1:

Hexamethylene diisocyanate at 50.4 parts was added to 300 parts of alkylene oxide polyaddition product (average molecular weight: 3,000; weight ratio of ethylene oxide/propylene oxide (hereinafter represented as EO/PO): 70/30) of which starting material is glycerine, and reacted at 100°C for 2 hours to yield the urethane prepolymer having free isocyanate groups at 4.0% by weight.

Then, the temperature of the system is once lowered to 70°C, N,N-dimethyl ethanolamine at 8.9 parts was added and reacted at 70°C for 100 minutes. The content of free isocyanate groups was 2.5% at that time. Next, the temperature of the system was to be 50°C, para-hydroxybenzoic acid at 29.5 parts was added, and the inner temperature was elevated to 70°C followed by reacting for 120 minutes.

After confirming an disappearance of the reaction of free isocyanate groups, dimethyl sulfate at 12.6 parts was added, quaternized at 70°C for 180 minutes and diluted with 1600 parts of water to yield the aqueous solution of clear viscous heat-reactive blocked urethane prepolymer A with 20% of a solid content.

### SYNTHETIC EXAMPLE 2:

Hexylane adipate (MW 1000) at 100 parts was added to 300 parts of alkylene oxide polyaddition product (average molecular weight: 3,000; weight ratio of EO/PO: 70/30) of which starting material is glycerine, further hexamethylene diisocyanate at 67.2 parts was added and reacted at 100°C for 2 hours to yield the urethane prepolymer having free isocyanate groups at 3.0% by weight.

Then, the temperature of the system is once lowered to 70°C, N,N-dimethyl ethanolamine at 8.9 parts was added and reacted at 70°C for 100 minutes. The content of free isocyanate groups was 1.8% at that time. Next, the temperature of the system was to be 50°C, butyl para-hydroxybenzoate at 41.5 parts was added, and the inner temperature was elevated to 70°C followed by reacting for 120 minutes.

After confirming an disappearance of the reaction of free isocyanate groups, diethyl sulfate at 15.4 parts was added, quaternized at 70°C for 180 minutes and diluted with 1860 parts of water to yield the aqueous solution of clear viscous heat-reactive blocked urethane prepolymer B with 20% of a solid content.

### SYNTHETIC EXAMPLE 3:

Hexamethylene diisocyanate at 50.4 parts was added to 300 parts of alkylene oxide polyaddition product product (average molecular weight: 3,000; weight ratio of EO/PO: 0/100) of which starting material is trimethylol propane, and reacted at 100°C for 2 hours to yield the urethane prepolymer having free isocyanate groups at 4.0% by weight.

Then, the temperature of the system is once lowered to 70°C, N,N-dimethyl ethanolamine at 8.9 parts was added and reacted at 70°C for 100 minutes. The content of free isocyanate groups was 1.2% at that time. Next, the temperature of the system was to be 50°C, para-hydroxybenzoic acid at 15 parts was added, and the inner temperature was elevated to 70°C followed by reacting for 120 minutes.

After confirming an disappearance of the reaction of free isocyanate groups, diethyl sulfate at 15.4 parts was added, quaternized at 70°C for 180 minutes and diluted with 1600 parts of water to yield the aqueous solution of clear viscous heat-reactive blocked urethane prepolymer C with 20% of a solid content.

### SYNTHETIC EXAMPLE 4:

Hexamethylene diisocyanate at 50.4 parts was added to 300 parts of alkylene oxide polyaddition product (average molecular weight: 3,000; weight ratio of EO/PO: 90/10) of which starting material is glycerine, and reacted at 100°C for 2 hours to yield the urethane prepolymer having free isocyanate groups at 4.0% by weight.

Then, the temperature of the system is once lowered to 70°C, N,N-dimethyl ethanolamine at 14.9 parts was added and reacted at 70°C for 100 minutes. The content of free isocyanate groups was 1.2% at that time. Next, the temperature of the system was to be 50°C, imidazole at 11.4 parts was added, and the inner temperature was elevated to 70°C followed by reacting for 120 minutes.

After confirming an disappearance of the reaction of free isocyanate groups, diethyl sulfate at 25.7 parts was added, quaternized at 70°C for 180 minutes and diluted with 1590 parts of water to yield the aqueous solution of clear viscous heat-reactive blocked urethane prepolymer D with 20% of a solid content.

### SYNTHETIC EXAMPLE 5:

Tolylene diisocyanate at 52.2 parts was added to 300 parts of alkylene oxide polyaddition product (average molecular weight: 3,000; weight ratio of EO/PO: 90/10) of which starting material is pentaerythritol, and reacted at 100°C for 2 hours to yield the urethane prepolymer having free isocyanate groups at 4.0% by weight.

Then, the temperature of the system is once lowered to 70°C, N,N-dimethyl ethanolamine at 8.9 parts was added and reacted at 70°C for 100 minutes. The content of free isocyanate groups was 2.5% at that time. Next, the temperature of the system was to be 50°C, butanoneoxime at 18.6 parts was added, and the inner temperature was elevated to 70°C followed by reacting for 120 minutes.

After confirming an disappearance of the reaction of free isocyanate groups, diethyl sulfate at 30.5 parts was added, quaternized at 70°C for 180 minutes and diluted with 1620 parts of water to yield the aqueous solution of clear viscous heat-reactive blocked urethane prepolymer E with 20% of a solid content.

### SYNTHETIC EXAMPLE 6:

Hexamethylene diisocyanate at 13.3 parts was added to 400 parts of alkylene oxide polyaddition product (average molecular weight: 20,000; weight ratio of EO/PO: 70/30) of which starting material is glycerine, and reacted at 100°C for 2 hours to yield the urethane prepolymer having free isocyanate groups at 1.0% by weight.

Then, the temperature of the system is once lowered to 70°C, N,N-dimethyl ethanolamine at 2.9 parts was added and reacted at 70°C for 100 minutes. The content of free isocyanate groups was 0.7% at that time. Next, the temperature of the system was to be 50°C, butyl salicylate at 13.5 parts was added, and the inner temperature was elevated to 70°C followed by reacting for 120 minutes.

After confirming an disappearance of the reaction of free isocyanate groups, diethyl sulfate at 5 parts was added, quaternized at 70°C for 180 minutes and diluted with 1740 parts of water to yield the aqueous solution of clear viscous heat-reactive blocked urethane prepolymer F with 20% of a solid content.

### SYNTHETIC EXAMPLE 7:

Hexamethylene diisocyanate at 50.4 parts was added to 100 parts of alkylene oxide polyaddition product (average molecular weight: 1,000; weight ratio of EO/PO: 0/100) of which starting material is glycerine, and reacted at 100°C for 2 hours to yield the urethane prepolymer having free isocyanate groups at 8.5% by weight.

Then, the temperature of the system is once lowered to 70°C, N,N-dimethyl ethanolamine at 9.0 parts was added and reacted at 70°C for 100 minutes. The content of free isocyanate groups was 5.7% at that time. Next, the temperature of the system was to be 50°C, salicylic acid at 30 parts was added, and the inner temperature was elevated to 70°C followed by reacting for 120 minutes.

After confirming an disappearance of the reaction of free isocyanate groups, diethyl sulfate at 15.6 parts was added, quaternized at 70°C for 180 minutes and diluted with 820 parts of water to yield the aqueous solution of clear viscous heat-reactive blocked urethane prepolymer G with 20% of a solid content.

### SYNTHETIC EXAMPLE 8:

Hexamethylene diisocyanate at 100.8 parts was added to 600 parts of alkylene oxide polyaddition product (average molecular weight: 3,000; weight ratio of EO/PO: 70/30) of which starting material is glycerine and 11.9 parts of N-methyl diethanolamine, and reacted at 90°C for 2 hours to yield the urethane prepolymer having free isocyanate groups at 2.5% by weight. Next, the temperature of the system is lowered to 50°C, butyl para-hydroxybenzoate at 78 parts was added, the inner temperature was elevated to 70°C and reacted for 120 minutes.

After confirming an disappearance of the reaction of free isocyanate groups, diethyl sulfate at 15.4 parts was added, quaternized at 70°C for 180 minutes and diluted with 3220 parts of water to yield the aqueous solution of clear viscous heat-reactive blocked urethane prepolymer H with 20% of a solid content.

### SYNTHETIC EXAMPLE 9:

Hexamethylene diisocyanate at 50.4 parts was added to 300 parts of alkylene oxide polyaddition product (average molecular weight: 3,000; weight ratio of EO/PO: 70/30) of which starting material is glycerine, and reacted at 100°C for 2 hours to yield the urethane prepolymer having free isocyanate groups at 4.0% by weight.

Then, the temperature of the system is once lowered to 70°C, N,N-dimethyl ethanolamine at 8.9 parts was added and reacted at 70°C for 100 minutes. The content of free isocyanate groups was 2.5% at that time. Next, the temperature of the system was to be 50°C, butyl para-hydroxybenzoate at 41.5 parts was added, and the inner temperature was elevated to 70°C followed by reacting for 120 minutes.

After confirming an disappearance of the reaction of free isocyanate groups, the aqueous solution of clear viscous heat-reactive blocked urethane prepolymer I with 20% of a solid content was obtained by diluting with 1620 parts of water dissolving 5.2 parts of malonic acid.

### COMPARATIVE SYNTHETIC EXAMPLE 1:

Hexamethylene diisocyanate at 50.4 parts was added to 300 parts of alkylene oxide polyaddition product (average molecular weight: 3,000; weight ratio of EO/PO: 70/30) of which starting material is glycerine, and reacted at 100°C for 2 hours to yield the urethane prepolymer having free isocyanate groups at 4.0% by weight.

Then, the temperature of the system is once lowered to 70°C, N,N-dimethyl ethanolamine at 8.9 parts was added and reacted at 70°C for 100 minutes. The content of free isocyanate groups was 2.5% at that time. Next, the temperature of the system was to be 50°C, phenol at 20 parts was added, and the inner temperature was elevated to 80°C followed by reacting for 120 minutes.

After confirming an disappearance of the reaction of free isocyanate groups, diethyl sulfate at 12.6 parts was added, quaternized at 70°C for 180 minutes and diluted with 1570 parts of water to yield the aqueous solution of clear viscous heat-reactive blocked urethane prepolymer J with 20% of a solid content.

### COMPARATIVE SYNTHETIC EXAMPLE 2:

Hexamethylene diisocyanate at 16.8 parts was added to 100 parts of propylene oxide polyaddition product (average molecular weight: 3,000; PO content: 100%) of which starting material is glycerine, and reacted at 100°C for 2 hours to yield the urethane prepolymer having free isocyanate groups at 3.6% by weight.

Then 40.5 parts of 30% sodium bisulfite was added, stirred at 45°C for 60 minutes, and subsequently diluted with 427 parts of water to prepare the aqueous solution of semi-clear viscous anionic heat-reactive blocked urethane prepolymer K with 20% of a resin content.

### COMPARATIVE SYNTHETIC EXAMPLE 3:

Hexamethylene diisocyanate at 50.4 parts was added to 300 parts of alkylene oxide polyaddition product (average molecular weight: 3,000; weight ratio of EO/PO: 70/30) of which starting material is glycerine, and reacted at 100°C for 2 hours to yield the urethane prepolymer having free isocyanate groups at 4.0% by weight.

Then, the temperature of the system is once lowered to 70°C, N,N-dimethyl ethanolamine at 8.9 parts was added and reacted at 70°C for 100 minutes. The content of free isocyanate groups was 2.5% at that time. Next, the temperature of the system was to be 50°C, dimethyl sulfate at 12.6 parts was added, quaternized at 70°C for 180 minutes and diluted with 1570 parts of water, and 6.4 parts of ethylenediamine was further added in order to water-crosslink free isocyanate groups to yield the aqueous solution of clear viscous urethane prepolymer L with 20% of a solid content.

The raw materials and so on used to obtain the urethane prepolymers in the above synthetic examples and comparative synthetic examples are listed in Tables 1 and 2.

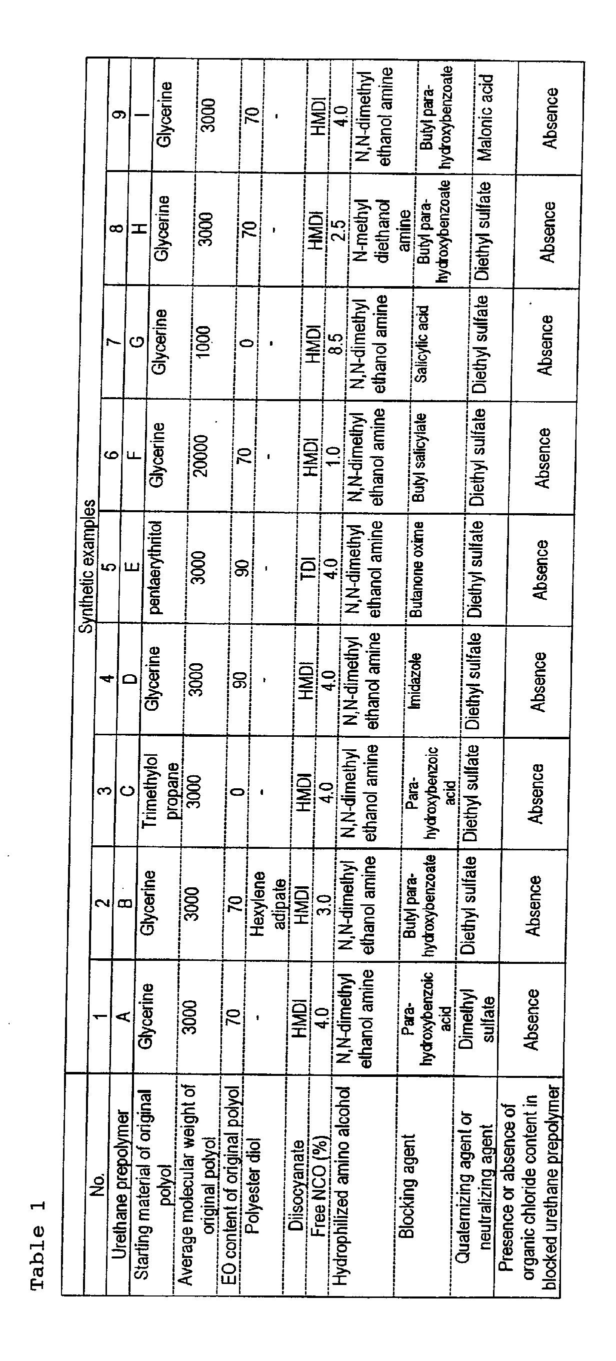

**Table 2**

| | Comparative synthetic examples | | |
|---|---|---|---|
| No. | 1 | 2 | 3 |
| Urethane prepolymer | J | K | L |
| Starting material of original polyol | Glycerine | Glycerine | Glycerine |
| Average molecular weight of original polyol | 3000 | 3000 | 3000 |
| EO content in original polyol | 70 | 0 | 70 |
| Diisocyanate | HMDI | HMDI | HMDI |
| Free NCO (%) | 4.0 | 3.6 | 4.0 |
| Hydrophilized amino alcohol | N,N-dimethyl ethanolamine | - | N,N-dimethyl ethanolamine |
| Blocking agent | Phenol | Sodium bisulfite | (water-crosslink with ethylenediamine) |
| Quaternizing agent or neutralizing agent | Dimethyl sulfate | - | Dimethyl sulfate |
| Ionic property of urethane resin | Cation | Anion | Cation |
| Presence or absence of organic chloride content in urethane resin | Absence | Absence | Absence |

### EXAMPLES 1 TO 12 AND COMPARATIVE EXAMPLES 1 TO 8:

Using 30 cm cut in length of wool top sliver (64/66S, pH8.2, weight: 30g/m) anionized with potassium persulfate as a sample, the following processing steps (1) to (4) were continuously carried out at a laboratory level, in which the actual processing steps were assumed.

### (1) Water treatment

After dipping in tap water at 20°C for 30 seconds, the sample was squeezed (60% squeezing).

### (2) Resin processing

After dipping in the following resin reagent processing bath (bath pH 6.5 to 7.5) prepared using the urethane prepolymer obtained from the above synthetic examples and comparative synthetic examples at 20°C for 30 seconds at a bath ratio of 1/30, the sample was squeezed (60% squeezing). A resin concentration of the resin reagent processing bath is as described in Tables 3 and 4.

| Resin reagent processing bath: | |
|---|---|
| Resin (urethane prepolymer) | Concentration described in Tables 3 and 4 (g/l) |
| 5% NaHCO₃ | 5 (g/l) |
| Elastron CAT-21 | 2 (g/l) |
| Unigard M-4 | 2 (g/l) |
| Sizol KO-C | 2 (g/l) |

(Elastron CAT-21 is an organic tin catalytic emulsion, Unigard M-4 is a solution of a hindered phenol anti-oxidant, and Sizol KO-C is a non-ionic penetrant; all supplied by Dai-ichi Kogyo Seiyaku Co., Ltd..)

### (3) Softening agent treatment

After dipping in the following softening agent processing bath (bath pH 7.3) at 20°C for 30 seconds at a bath ratio of 1/30, the sample was squeezed (60% squeezing).

| Softening agent processing bath: | |
|---|---|
| Soft silicon 150 | 15 (g/l) |
| 5% NaHCO₃ | 5 (g/l) |
| Sizol KO-C | 2 (g/l) |

(Soft silicon 150 is an amino silicon emulsion supplied by Dai-ichi Kogyo Seiyaku Co., Ltd..)

### (4) Drying

The sample was heated in a oven at 105°C for 20 minutes.

After leaving a piece of the wool top sliver treated with the above (1) to (4) for all day and night, both ends were respectively tied and its length was measured. This was placed in a net for washing, washed in a home laundry machine five times (according to JIS L0217 103 method), subsequently left under an atmosphere of 20°C and 40% RH for 24 hours, and then a shrinking ratio of the piece of top sliver was determined. The results are shown in Tables 3 and 4.

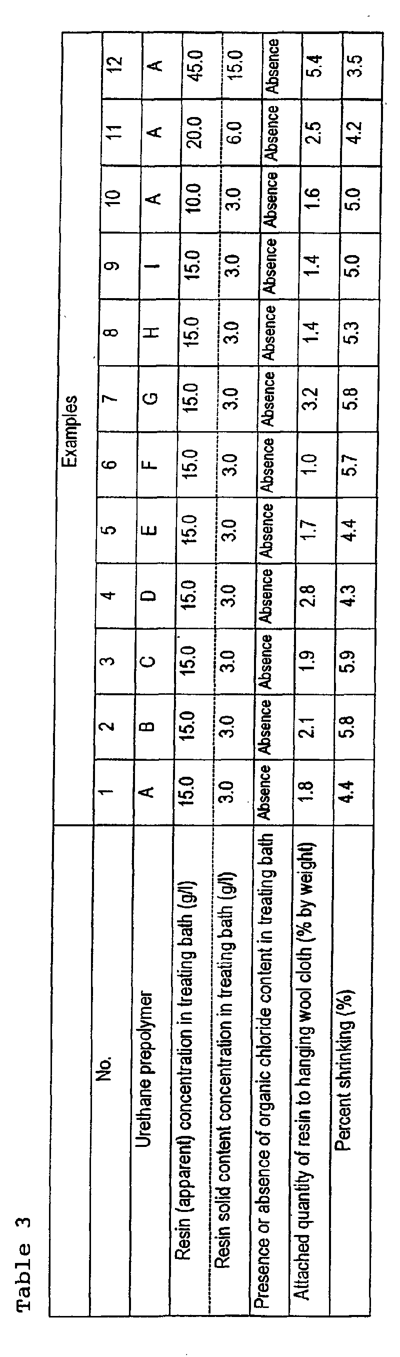

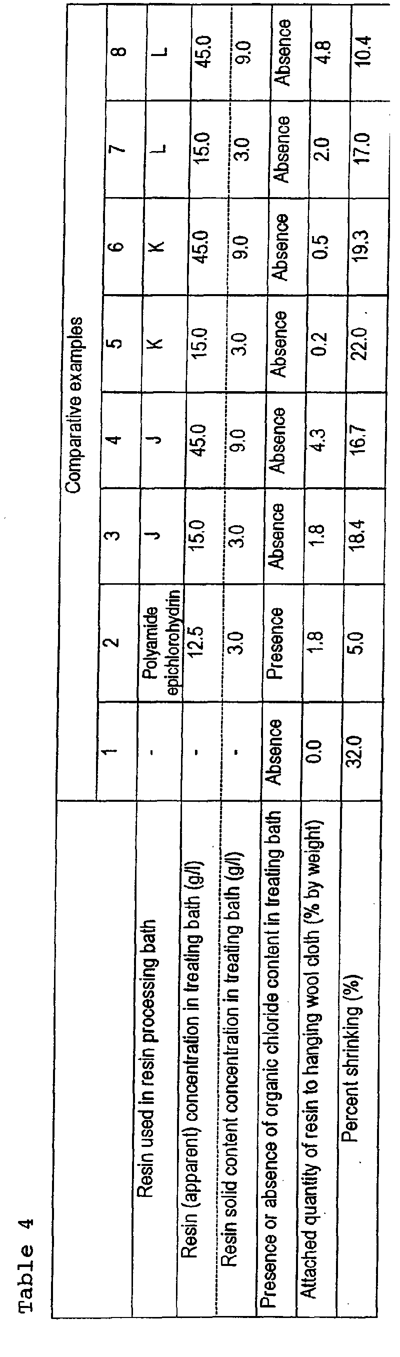

By means of the shrink-proofing agent for keratin fibers and the process for shrink-proofing of the invention, the non-chlorinated shrink-proofing treatment wherein no problem by AOC (absorbable organic halogens) occurs can be extremely efficiently carried out in a continuous manner. Further the invention can impart extremely excellent shrink-proofing to the keratin fibers treated with the shrink-proofing agent, and has a feature that the agent does not impair the soft texture characteristic of keratin fibers.

## Claims

1. A shrink-proofing agent for keratin fibers containing an urethane prepolymer, **characterized by** a water-soluble heat-reactive urethane prepolymer wherein a part of the free isocyanate groups are reacted with an active hydrogen compound to introduce hydrophilic groups and the remaining isocyanate groups are blocked by a blocking agent which regenerates isocyanate groups by a heating treatment.

2. The shrink-proofing agent for keratin fibers according to claim 1, wherein said active hydrogen compound is an amino alcohol comprising tertiary amino groups.

3. The shrink-proofing agent for keratin fibers according to claim 2, wherein the tertiary amino groups contained in said amino alcohol are quaternized with a quaternizing agent or neutralized with an acid.

4. The shrink-proofing agent for keratin fibers according to any one of claims 1 to 3, wherein said blocking agent is a phenol having an electron withdrawing group at the ortho- or para-position.

5. The shrink-proofing agent for keratin fibers according to claim 4, wherein said electron withdrawing group is a carboxyl group or an esterified carboxyl group.

6. The shrink-proofing agent for keratin fibers according to claim 4, wherein said blocking agent is one or more selected from the group consisting of para-hydroxybenzoic acid, para-hydroxybenzoate ester, salicylic acid, and salicylate ester.

7. The shrink-proofing agent for keratin fibers according to any one of claims 1 to 3, wherein said blocking agent is an imidazole.

8. The shrink-proofing agent for keratin fibers according to any one of claims 1 to 3, wherein said blocking agent is an oxime.

9. A processing method for shrink-proofing of keratin fibers **characterized by** treating anionized keratin fibers with the shrink-proofing agent for keratin fibers according to any one of claims 1 to 8 and subsequently conducting a drying treatment.
